# EUROPEAN PATENT APPLICATION

(11) **EP 1 107 049 A2**
(43) Date of publication of application: **13.06.2001**
(21) Application number: 99125525.8
(22) Date of filing: 22.12.1999
(51) Int. Cl.: G02F 1/1337

(54) **Method for regenerating liquid crystal alignment materials**

(30) Priority: 03.12.1999 KR 9954873
(71) Applicant: SAMSUNG ELECTRONICS CO., LTD., Suwon-City, Kyungki-do (KR)
(72) Inventor: Lee, Bong-Woo, Asan-city, Choongcheongnam-do (KR); Lee, Soo-Won, Cheonan-city, Choongcheongnam-do (KR); Nam, Sho-Hak, Suwon-city, Kyungki-do (KR); Ju, Jin-Ho, Seoul (KR); Jeong, Soo-Im, Yongin-city, Kyungki-do (KR); Park, Hong-Sick, Yongin-city, Kyungki-do (KR); Kang, Sung-Chul, Seongnam-city, Kyungki-do (KR)
(74) Representative: Modiano, Guido, Dr.-Ing.

(57) **Abstract**

The present invention relates to a method for regenerating a liquid crystal alignment material, wherein a regenerated liquid crystal alignment layer that displays equal effects as an original liquid crystal alignment material in a LCD liquid crystal process can be regenerated by collecting a waste solution of an alignment material which is generated in mass during LCD manufacturing processes using liquid crystal alignment material. This is done by solidifying polyamic acids and soluble polyimides by putting a waste solution of alignment material into an organic solution or ultra purified water in which the alignment material constituents of polyamic acids and soluble polyimides are insoluble, separating polyamic acids and soluble polyimides from the organic solvent or ultra purified water, and dissolving the separated solid polyamic acids and soluble polyimides into a solvent. The regeneration of a liquid crystal alignment layer material using this method can greatly contribute to manufacturing costs reductions.

## Description

### CROSS REFERENCE TO RELATED APPLICATION

This application is based on application No. 99-54873 filed in the Korean Industrial Property Office on December 3, 1999, the contents of which are incorporated hereinto by reference.

### BACKGROUND OF THE INVENTION

### (a) Field of the Invention

The present invention relates to a method for regenerating liquid crystal alignment materials, more particularly to a method for regenerating liquid crystal alignment material constituents of polyamic acids (sometimes referred to as "PAA") and soluble polyimides (sometimes referred to as "sol. PI") by collecting liquid crystal alignment material waste solution which is produced in mass amounts in LCD manufacturing processes using liquid crystal alignment materials.

### (b) Description of the Related Art

There is a difference in the response of liquid crystal to external forces such as electric fields, etc. since physical property constants of liquid crystals depend on the state of molecular arrangement. Therefore, liquid crystal molecular alignment control is an essential technology for display component construction as well as for liquid crystal physical property research. However, it is difficult to obtain uniformed molecular arrangement only by simply filling a gap between glass substrate plates with liquid crystal materials. Therefore, it is common to form an alignment layer on the glass substrate plates.

Although alignment layer can be made primarily of inorganic or organic constituents and a mixture of both, organic materials are mainly used as a composition material of practical liquid crystal display components.

Since the introduction of SiO vacuum deposition suggested by Janning in 1972, the characteristic properties of liquid crystal materials have not been adversely effected by either the mass production of display components or the alignment control technology for liquid crystal display components. Hence an alignment control technology employing suitable organic polymers for mass production has developed. . That is, liquid crystal molecular alignment is controlled by a rubbing organic polymer layers formed on glass substrate plates by a rotational coating method or a printing coating method, and then curing.

The rubbing method has been know since Mauguin observed in 1911 that the major axes of liquid crystal molecules become evenly aligned in a rubbed direction when glass substrate plates are rubbed in a certain direction by materials such as cloth, etc. Ever since then, even though many researchers have been investigation the rubbing method for appropriate substrate plates and thin layer materials suitable for the rubbing method, a definite selection basis for these materials has currently not yet been established

However, because of the use of high hydrolytic Schiff base liquid crystals since the beginning of the mass production of twisted nematic type LCD components, glass frit sealing capable of securing components reliably has been essential. Therefore, polyimide based materials which exhibited no problems in high temperature treating processes were selected. Thereafter, polyimide based materials have been confirmed to be more superior to other organic polymers in aspects of printing, rubbing, alignment control, and chemical stabilization, so that polyimide based materials are widely used as alignment layer materials of various LCD components even today.

Generally, polyimide based polymers synthesize polyamic acids (PAA) or soluble polyimide (sol. PI) by reacting diamine and acid anhydride in a solvent wherein the material for printing is polyamic acids or soluble polyimides, and become polyimide through the drying, heating, and curing processes after printing.

The methods for forming an alignment layer using this polyimide include various methods such as spinning, spraying, dipping, printing methods. etc., with the printing method currently being mainly used on account of its compatibility with mass production processes.

However, this printing method has problems in that the manufacturing costs increases have been caused by raw material costs increases since about 70% of the solution out of the supplied alignment layer raw materials is wasted, i.e., not actually used in the alignment layer printing.

Additionally, there are also cost problems associated with the high price of treating waste alignment layer material.

### SUMMARY OF THE INVENTION

Therefore, the present invention can greatly contribute to cost reduction by effectively regenerating the waste alignment materials that are disposed after they are used in an LCD liquid crystal process. Furthermore, it is an object of the present invention to provide a method for regenerating the liquid crystal alignment materials which can result in a reduction in the waste disposal cost by remarkably decreasing the amount of the waste alignment materials generated.

The present invention provides a method for regenerating liquid crystal alignment materials characterized in comprising steps of collecting waste solution of the liquid crystal alignment materials, solidifying polyamic acids and soluble polyimides by putting the above collected waste solution of liquid which the liquid crystal alignment material constituents of polyamic acids and soluble polyimides are insoluble, and separating polyamic acids and soluble polyimides from the above organic solvent or ultra purified water in order to achieve the above object.

Furthermore, the present invention provides a method for regenerating liquid crystal alignment materials characterized in comprising steps of collecting a waste solution of the liquid crystal alignment materials, solidifying polyamic acids and soluble polyimides by putting the above collected waste solution of liquid crystal alignment materials into an organic solvent or ultra purified water in the which the liquid crystal alignment material constituents of polyamic acids and soluble polyimides are insoluble, separating the polyamic acids and soluble polyimides from the above organic solvent or ultra purified water, and dissolving the above separated polyamic acid and soluble polyimide into a mixed solvent comprising a composition such as an undiluted solution of the alignment materials.

Furthermore, the present invention provides a method for regenerating liquid crystal alignment materials characterized in comprising steps of collecting a waste solution of the liquid crystal alignment materials using a cooling means equipped transferring pipe and raw material container, solidifying polyamic acids and soluble polyimides by putting the above collected waste solution of liquid crystal alignment materials into an organic solvent or ultra purified water in which the liquid crystal alignment material constituents of polyamic acids and soluble polyimides are insoluble, separating the polyamic acids and soluble polyimides from the above organic solvent or ultra purified water, and dissolving the above separated polyamic acids and soluble polyimides into a mixed solvent comprising a composition such as an undiluted solution of the alignment materials.

Furthermore, the present invention provides a method for regenerating liquid crystal alignment materials characterized in comprising the steps of collecting a waste solution of the liquid crystal alignment materials using a transferring pipe and a raw material container that are equipped with an air contact blocking means in which the contact between a waste solution of a liquid crystal alignment material and air is blocked and with a cooling means in which a waste solution of a waste solution of a liquid crystal alignment material is cooled, solidifying polyamic acids and soluble polyimides by putting the above collected waste solution of liquid crystal alignment materials into an organic solvent or ultra purified water in which the liquid crystal alignment material constituents of polyamic acids and soluble polyimides are insoluble , separating polyamic acids and soluble polyimides from the above organic solvent or ultra purified water, and dissolving the above separated polyamic acids and soluble polyimides into a mixed solvent comprising a composition such as an undiluted solution of the alignment materials.

Furthermore, the present invention provides a method for regenerating liquid crystal alignment materials characterized in comprising the steps of collecting a waste solution of the liquid crystal alignment materials using a transferring pipe and a raw material container that are equipped with an air contact blocking means in which the contact between a waste solution of a liquid crystal alignment material and air is blocked and with a cooling means in which a waste solution of a waste solution of a liquid crystal alignment material is cooled, solidifying polyamic acids and soluble polyimides by putting the above collected waste solution of liquid crystal alignment materials into an organic solvent or ultra purified water in which the liquid crystal alignment material constituents of polyamic acids and soluble polyimides are insoluble, separating polyamic acids and soluble polyimides from the above organic solvent or ultra purified water, washing and drying the above separated polyamic acids and soluble polyimides, and dissolving the above washed and dried polyamic acids and soluble polyimides into a mixed solvent comprising a composition such as an undiluted solution of the alignment materials.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a graph that represents the viscosity variation of a liquid crystal alignment material according to temperature and storage period;
FIG. 2 represents a procedure in which hydrolysis occurs by the reaction of PAA and H₂O as per a chemical formula; and

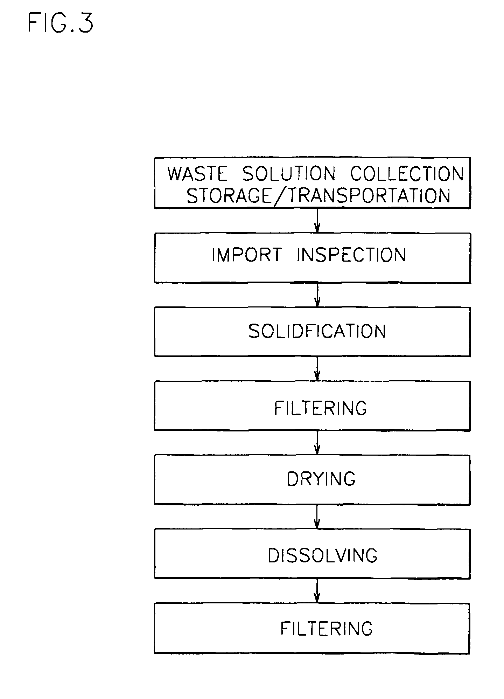

FIG. 3 represents a process diagram of a method for regenerating the liquid crystal alignment materials according to EXAMPLE 1.

### DETAILED DESCRIPTION OF THE PREFERRED EMBODIMENTS

In the following detailed description, only the preferred embodiments of the invention have been shown and described, simply by way of illustration of the best mode contemplated by the inventor(s) of carrying out the invention. As will be realized, the invention is capable of modification in various obvious respects, all without departing from the invention. Accordingly, the drawings and the description are to be regarded as illustrative in nature, and not restrictive.

The present invention is described in detail below.

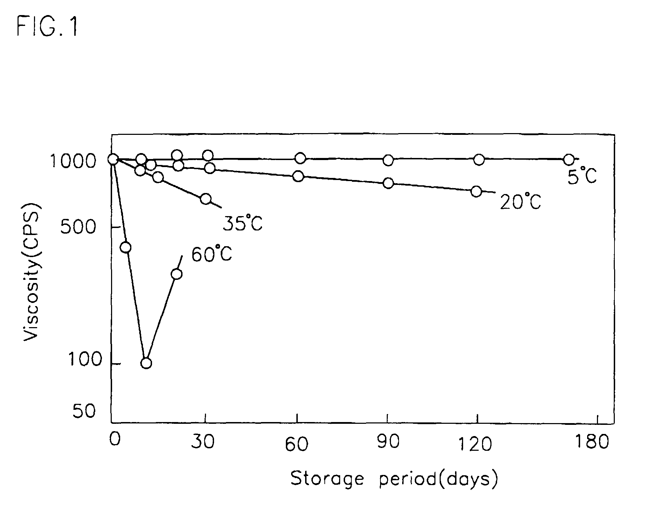

It is preferable not to mix foreign materials, like other solvents, with liquid crystal alignment materials while collecting a waste solution of crystal alignment materials in the present invention. Separated piping or devices can be used for preventing the introduction of foreign materials. Furthermore, it is preferable to maintain the above waste solution at a temperature of below 5 degrees centigrade during collection, storage, and transportation of the waste solution of the liquid crystal alignment materials. FIG. 1 provides a graph that represents the viscosity variation of alignment materials according to temperature and storage period. Almost no viscosity variation is indicated at 5°C in FIG. 1. A cooling bath or cooling jacket can be used in order to maintain such a temperature.

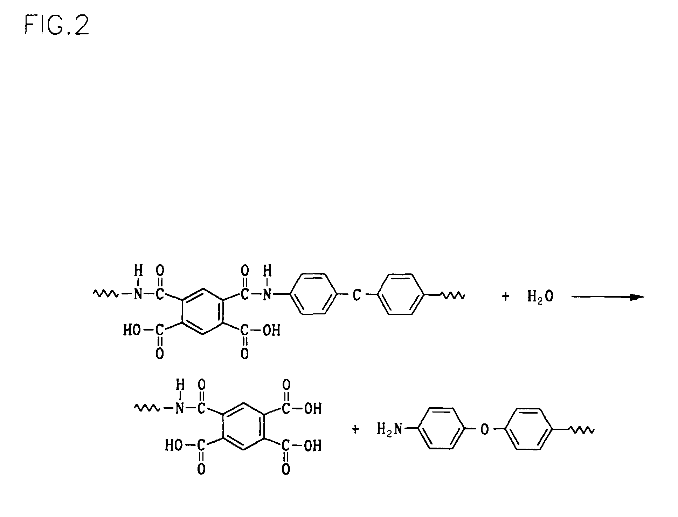

Furthermore, it is preferable to block contact between the above waste solution of liquid crystal alignment materials and air containing moisture since polyimide is hydrolyzed when the liquid crystal alignment material constituent of polyimide comes in contact with H₂O. FIG. 2 represents a Chemical Formula of the procedure in which polyamic acid is reacted with H₂O resulting in the hydrolysis. Polyamic acid hydrolysis produces a problem of printing ratio deterioration by dropping the viscosity of alignment materials The physical properties of undiluted solution of alignment layer and waste solution are compared in the following Table 1.

**[Table 1]**

| Samples | Moisture (%) | Viscosity (Cp) | Cl (ppm) | Solid content (%) |
|---|---|---|---|---|
| Undiluted solution of alignment layer | 0.3 | 24.6 | Not detected | 5.0 |
| Waste solution of alignment layer | 3.3 | 19.2 | 14.3 | 4.9 |

As is represented in the above Table 1, an undiluted solution of the alignment materials has a lower moisture content, higher viscosity, and lower chlorine (Cl) content compared to a waste solution. The solid content percentages, however, are similar. As is represented in the above Table 1, moisture greatly influences the viscosity and waste solution contamination can be prevented by preventing contact with air containing moisture. It is preferable to equip a device for blowing in N₂ gas as a means for blocking air contact during the collection, storage, and transportation of a waste solution in order to block contact with air containing moisture.

Furthermore, the present invention comprises the step of solidifying polyamic acids and soluble polyimides by putting the above collected waste solution of liquid crystal alignment materials into an organic solvent or ultra purified water in which polyamic acids and soluble polyimides are insoluble. The above organic solvent is preferably an ether group and the consumption amount of the above organic solvent or ultra purified water is preferably over 130 wt parts out of 100 wt parts of the above waste solution of the liquid crystal alignment materials, and more preferably from 130 to 160 wt parts.

The present invention further comprises the step of separating polyamic acids and soluble polyimides from the above organic solvent. Although a filtering method is generally used in the above separation, other methods for separating solids from a solvent, such as centrifugal separating methods, can also be used.

Furthermore, the present invention can further comprise the step of washing and drying the solid polyamic acids and soluble polyimides filtered for more surely removing any organic solvent from the solid polyamic acids and soluble polyimides. A vacuum oven is preferably used in the above drying step.

Furthermore, the present invention comprises the steps of dissolving the above separated polyamic acids and soluble polyimides into a mixed solvent comprising a composition such as an undiluted solution of the alignment materials. The above regenerated solid alignment layer material is dissolved into a solvent used in an undiluted solution of an alignment material in order to make an alignment material solution since the above separated polyamic acids and soluble polyimides are in a solid form. Polar solvents such as N-methyl-2-pyrrolidinone and/or γ-butyrolactone, etc. are used as the above solvent, and solvents having the low surface tension, such as cellosolve, etc., are generally mixed together in order to improve printability.

The EXAMPLES of the present invention are described in the following. However, the following EXAMPLES are only for illustrating the present invention, which is not restricted to the following EXAMPLES.

### EXAMPLE 1

After collecting a waste solution of liquid crystal alignment material generated in a LCD liquid crystal process through a pipe while maintaining the temperature below 5°C and blowing in N₂ gas, polyamic acids and soluble polyimides were solidified by putting the above collected waste solution of an alignment material into ultra purified water, and the solid polyamic acids and soluble polyimides were separated from ultra purified water by filtering a mixed solution of an organic solvent, polyamic acids, and soluble polyimides. After washing the above separated solid polyamic acids and soluble polyimides with distilled water, they were dried in a vacuum oven. After putting the above dried solid polyamic acids and soluble polyimides into a mixed solvent in which N-methyl-2-pyrrolidinone, γ-butyrolactone, and cellosolve were mixed, heat was added to dissolve the solid polyamic acids and the soluble polyimides in order to manufacture regenerated liquid crystal alignment material.

### Test 1

Solid contents, viscosities, moisture contents, and metallic impurity contents were measured for a regenerated liquid crystal alignment material manufactured according to the above EXAMPLE 1, a waste solution of liquid crystal alignment material, and an undiluted solution of a liquid crystal alignment material which were simply collected after primarily used in the LCD liquid crystal process. The results of the above measurements are represented in Table 2.

**[Table 2]**

| | Undiluted solution | Waste solution | Regenerated liquid crystal alignment materials |
|---|---|---|---|
| Solid content (wt%) | 4.93 | 5.27 | 5.13 |
| Viscosity (Cp) | 24.6 | 19.9 | 25.8 |
| Moisture content (%) | 0.25 | 4.58 | 0.34 |
| Metallic impurities (ppm) | Na < 0.5 | Na 0.19 | Na 0.18 |
| | Mg < 0.5 | Mg 0.02 | Mg 0.04 |
| | Al < 0.5 | Al 0.05 | Al 0.06 |
| | K < 0.5 | K0.02 | K 0.16 |
| | Fe < 0.5 | Fe 0.05 | Fe0.10 |

The viscosity and moisture content properties are considered to be important in the LCD liquid crystal process. Table 2 indicates that the viscosity of a regenerated liquid crystal alignment material was 25.8 Cp, which is far higher than 19.9 Cp of a waste solution and similar to the level of 24.6 Cp of an undiluted solution. Additionally, the moisture content of a regenerated liquid crystal alignment material was 0.34%, which is far less than the 4.58% of a waste solution and similar to the level of 0.25% of an undiluted solution, as represented in the above Table 2. The above results show that the physical properties of a liquid crystal alignment material of EXAMPLE 1 are equal to those of an undiluted solution.

### Test 2

Regenerated liquid crystal alignment material manufactured in the above EXAMPLE 1 was applied in polyimide printing and rubbing processes so as to be compared with an undiluted solution of a liquid crystal alignment material. Twenty-six (26) sheets were printed and there were no rejected products in the printing process. There were also no particular differences in the products of Example 2 from the printing results of an undiluted solution in terms of leveling, edge lumps, drying, and pinhole ratios. The layer thickness was 665 angstrom in this Example, showing no particular difference from the use of an undiluted solution. Furthermore, there were also no particular differences in eccentricity, leaning, polyimide lifting, and cloth contamination when compared with the results from using an undiluted solution in the rubbing process. The above results show that an undiluted solution of an alignment material is no different from a regenerated alignment material.

A method for generating a liquid crystal alignment material of the present invention can greatly contribute to cost reductions as well as the prevention of the environmental contamination by making possible the manufacture of a regenerated liquid crystal alignment material that displays equal effects as that of an undiluted solution of a liquid crystal alignment material. This is done by regenerating a waste solution of a liquid crystal alignment material, which accounts for a considerable portion of the costs in the LCD liquid crystal process since it is normally disposed after use.

While the present invention has been described in detail with reference to the preferred embodiments, those skilled in the art will appreciate that various modifications and substitutions can be made thereto without departing from the spirit and scope of the present invention as set forth in the appended claims.

## Claims

1. A method for regenerating a liquid crystal alignment material characterized in comprising steps of collecting a waste solution of a liquid crystal alignment material; solidifying polyamic acids and soluble polyimides by putting the collected waste solution of a liquid crystal alignment material into an organic solvent or ultra purified water in which liquid crystal alignment materials of polyamic acids and soluble polyimides are insoluble; and separating polyamic acids and soluble polyimides solidified from the organic solvent or ultra purified water.

2. A method for regenerating a liquid crystal alignment material characterized in comprising steps of collecting a waste solution of a liquid crystal alignment material; solidifying polyamic acids and soluble polyimides by putting the collected waste solution of a liquid crystal alignment material into an organic solvent or ultra purified water in which liquid crystal alignment materials of polyamic acids and soluble polyimides are insoluble; separating polyamic acids and soluble polyimides solidified from the organic solvent or ultra purified water, and dissolving the separated polyamic acids and soluble polyimides into a mixed solvent comprised of a composition such as an undiluted solution of an alignment material.

3. A method for regenerating a liquid crystal alignment material characterized in comprising steps of collecting a waste solution of a liquid crystal alignment material using a cooling means equipped transferring pipe and raw material container; solidifying polyamic acids and soluble polyimides by putting the collected waste solution of a liquid crystal alignment material into an organic solvent or ultra purified water in which liquid crystal alignment materials of polyamic acids and soluble polyimides are insoluble; separating polyamic acids and soluble polyimides solidified from the organic solvent or ultra purified water, and dissolving the separated polyamic acids and soluble polyimides into a mixed solvent comprised of a composition such as an undiluted solution of an alignment material.

4. A method for regenerating a liquid crystal alignment material characterized in comprising steps of collecting a waste solution of a liquid crystal alignment material using a transferring pipe and raw material container that are equipped with a air contact blocking means in which air contact with a waste solution of a liquid crystal alignment material is blocked and with a cooling means in which a waste solution of a liquid crystal alignment material is cooled; solidifying polyamic acids and soluble polyimides by putting the collected waste solution of a liquid crystal alignment material into an organic solvent or ultra purified water in which liquid crystal alignment materials of polyamic acids and soluble polyimides are insoluble; separating polyamic acids and soluble polyimides solidified from the organic solvent or ultra purified water, and dissolving the separated polyamic acids and soluble polyimides into a mixed solvent comprised of a composition such as an undiluted solution of an alignment material.

5. A method for regenerating a liquid crystal alignment material characterized in comprising steps of collecting a waste solution of a liquid crystal alignment material using a transferring pipe and raw material container that are equipped with a air contact blocking means in which air contact with a waste solution of a liquid crystal alignment material is blocked and with a cooling means in which a waste solution of a liquid crystal alignment material is cooled; solidifying polyamic acids and soluble polyimides by putting the collected waste solution of a liquid crystal alignment material into an organic solvent or ultra purified water in which liquid crystal alignment materials of polyamic acids and soluble polyimides are insoluble; separating polyamic acids and soluble polyimides solidified from the organic solvent or ultra purified water, washing and drying the separated polyamic acids and soluble polyimides, and dissolving the washed and dried polyamic acids and soluble polyimides into a mixed solvent comprised of a composition such as an undiluted solution of an alignment material.

6. A method for regenerating a liquid crystal alignment material in accordance with claim 1, claim 2, claim 3, claim 4 or claim 5, further characterized in that a filtering method is used in the step of separating the solidified polyamic acids and soluble polyimides from the organic solvent or ultra purified water.

7. A method for regenerating a liquid crystal alignment material in accordance with claim 3, claim 4, or claim 5, further characterized in that a waste solution of the liquid crystal alignment liquid is collected at a temperature of below 5 degrees centigrade.

8. A method for regenerating a liquid crystal alignment material in accordance with claim 3, claim 4, or claim 5, further characterized in that the cooling means is a cooling bath or a cooling jacket.

9. A method for regenerating a liquid crystal alignment material in accordance with claim 4 or claim 5, further characterized in that a waste solution of the liquid crystal alignment liquid is collected while blowing in N₂ gas during collection, storage, and transportation of the waste solution.

10. A method for regenerating a liquid crystal alignment material in accordance with claim 1, claim 2, claim 3, claim 4 or claim 5, further characterized in that the organic solvent is an ether group.

11. A method for regenerating a liquid crystal alignment material in accordance with claim 1, claim 2, claim 3, claim 4 or claim 5, further characterized in that the consumption amount of the organic solvent or ultra purified water is 130 wt parts or more for 100 wt parts of the waste solution of alignment material.

12. A method for regenerating a liquid crystal alignment material in accordance with claim 5 characterized in that a vacuum oven is used in the step of washing and drying the separated polyamic acids and soluble polyimides.
